# EUROPÄISCHE PATENTSCHRIFT

(11) **EP 3 802 169 B1**
(45) Veröffentlichungstag und Bekanntmachung des Hinweises auf die Patenterteilung: **11.08.2021**
(21) Anmeldenummer: 19728652.9
(22) Anmeldetag: 03.06.2019
(51) Int. Cl.: B60G 7/00, B60B 35/00, F16B 37/06

(54) **ACHSMONTAGEEINHEIT**
AXLE MOUNTING UNIT
UNITÉ DE MONTAGE D'ESSIEU

(30) Priorität: 06.06.2018 DE 102018113434
(43) Veröffentlichungstag der Anmeldung: 14.04.2021
(73) Patentinhaber: SAF-HOLLAND GmbH, 63856 Bessenbach (DE)
(72) Erfinder: BRUNSCH, Bernd, 63303 Dreieich (DE)
(74) Vertreter: Müller Schupfner & Partner Patent- und Rechtsanwaltspartnerschaft mbB
(86) Internationale Anmeldenummer: PCT/EP2019/064320
(87) Internationale Veröffentlichungsnummer: WO 2019/233939

(56) Entgegenhaltungen:
- WO-A1-03/081058
- DE-A1- 10 110 495
- DE-A1- 19 704 124
- DE-A1-102012 004 403
- DE-B- 1 166 016
- KR-A- 20060 002 423
- US-A1- 2003 080 525

## Beschreibung

Die Erfindung betrifft eine Achsmontageeinheit und ein Verfahren zur Montage einer Achsmontageeinheit.

Achsmontageeinheiten sind bereits im Stand der Technik bekannt, diese dienen dazu, eine Achse an einem Lenker, insbesondere einem Längslenker, festzulegen. Diese Achsmontageeinheiten weisen meist Spannverbindungen auf, um die Achse mit dem Lenker zu verspannen. Diese Spannverbindungen verursachen dabei einen hohen Wartungsaufwand, da diese während des Betriebs nachgespannt werden müssen, um eine sichere Verbindung zu erreichen. Zusätzlich besteht bei diesen Spannverbindungen auch noch die Gefahr, dass wenn eine solche Spannverbindung gelöst wird, insbesondere durch ein Zerschneiden von Teilen der Achsmontageeinheit oder durch Versagen von Bauteilen, Schäden, insbesondere an Personen, entstehen können. Dieser Umstand ist darin begründet, dass durch das Verspannen ein hohes Maß an Verformungsenergie in der Achsmontageeinheit gespeichert wird, welche beim Lösen sprunghaft frei wird, sodass herum fliegende Teile beispielsweise das Wartungspersonal verletzen können.

Die DE 1 166 016 B bezieht sich auf eine Blattfederbefestigung für starre Achsen von Kraftfahrzeugen, bei denen die Federblätter unter Verwendung elastischer Zwischenlagen mittels Schraubenbolzen an einer am Achsgehäuse befindlichen geeigneten Abstützfläche befestigt werden.

Die DE 197 04 124 A1 offenbart eine Bügelanordnung umfassend einen Bügel, mit zwei im wesentlichen parallelen Schenkeln, einem die Schenkel verbindenden Mittelteil und einem sichern an den Schenkeln an deren vom Mittelteil weg gerichteten Ende angeordneten Sicherungsorgan.

Die DE 101 10 495 A1 offenbart die Merkmale des Oberbegriffs des Anspruchs 1 und bezieht sich auf eine Achseinbindung für gefederte Fahrzeugachsen mit einem vorzugswiesen als Vierkantrohr mit abgerundeten Kanten ausgebildeten Achskörper, den Achskörper an seiner Ober- und Unterseite kreuzenden Längslenkern sowie quer sowohl zu den Längslenkern wie auch zu dem Achskörper verlaufenden, diese Teile gegeneinander ziehenden Zugstangen.

Die DE 10 2012 004 403 A1 bezieht sich auf eine Vorrichtung zur Verbindung eines Achskörpers einer Radachse eines Fahrzeugs mit einer den Achskörper oberhalb oder unterhalb kreuzenden, sich in Fahrzeuglängsrichtung erstreckenden Lenker mit einem zwischen dem Achskörper und dem Lenker gelegenen und diese bereichsweise begrenzenden Achslappen und mit einer von Zugstangen durchsetzen, den Achskörper oder den Lenker bedeckenden Kopfplatte, wobei die Zugstangen den Achskörper oder den Lenker umgreifen und der Achskörper und der Lenker über die Zugstangen und die Kopfplatte miteinander verspannbar sind.

Die WO 03/081058 A1 offenbart ein Befestigungselement, umfassend einen allgemein quadratischen Flansch mit bogenförmigen Ecken.

Die KR 2006 0002423 A beschreibt ein Achsgehäuse, bei der es möglich ist, die Winkeleinstellung für eine Hinterradaufhängung einzustellen.

Die US 2003/0080525 A1 offenbart eine Befestigungsanordnung, die zwei oder mehr eingeklemmte Komponenten zwischen Klemmstrukturen der Befestigungsanordnung zusammenklemmt.

Es ist somit Aufgabe der vorliegenden Erfindung eine Achsmontageeinheit und ein Verfahren zur Montage einer Achsmontageeinheit bereitzustellen, welche ein hohes Maß an Sicherheit bieten, als auch den Wartungsaufwand reduzieren.

Gelöst wird diese Aufgabe mit einer Achsmontageeinheit gemäß Anspruch 1 und mit einem Verfahren zur Montage einer Achsmontageeinheit gemäß dem Anspruch 9. Weitere Vorteile und Merkmale ergeben sich aus den Unteransprüchen, der Beschreibung und den Figuren.

Erfindungsgemäß umfasst eine Achsmontageeinheit, insbesondere für Nutzfahrzeuge, ein Umgriffselement, ein Abschlusselement, zumindest ein Befestigungselement und eine Sicherungseinrichtung, wobei die Achsmontageeinheit dazu ausgelegt ist, ein erstes Fahrwerksteil, insbesondere eine Achse, mit einem zweiten Fahrwerksteil, insbesondere einem Lenker, zu verspannen, wobei das Umgriffselement dazu ausgelegt ist, an dem ersten Fahrwerksteil angeordnet zu sein, wobei das Abschlusselement dazu ausgelegt ist, an dem zweiten Fahrwerksteil angeordnet zu sein, wobei das Umgriffselement zumindest zwei Schenkel aufweist, welche sich jeweils in eine Schenkelrichtung erstrecken, wobei sich das Abschlusselement zwischen den beiden Schenkeln erstreckt oder dazu ausgelegt ist, sich zwischen den beiden Schenkeln zu erstrecken, wobei das Befestigungselement das Abschlusselement mit dem Umgriffselement verspannt oder dazu ausgelegt ist, das Abschlusselement mit dem Umgriffselement zu verspannen, wobei die Sicherungseinrichtung eine Formschlusssicherung ist und/oder ein Mittel zur Schaffung einer Formschlusssicherung ist, wobei die Formschlusssicherung dazu dient, bei einem mechanischen Versagen oder dem Durchtrennen eines Teils der Achsmontageeinheit, insbesondere eines Teils des Schenkels, eine Verlagerung des abgetrennten Teils formschlüssig in Schenkelrichtung zu begrenzen und/oder zu verhindern. Die erfindungsgemäße Achsmontageeinheit dient in anderen Worten unter anderem dazu, ein erstes Fahrwerksteil mit einem zweiten Fahrwerksteil zu verspannen bzw. diese relativ zueinander festzulegen, insbesondere durch eine kraftschlüssige und/oder formschlüssige Verbindung. Das erste Fahrwerksteil und/oder das zweite Fahrwerksteil können beispielsweise durch eine Welle, eine Achse, insbesondere ein Achsrohr, einen Lenker, insbesondere einen Längslenker, gebildet sein, wobei das erste Fahrwerksteil bevorzugt dasjenige Fahrzeugfahrwerksteil ist, an welchem das Rad der Achse bzw. der Welle befestigt ist. Das zweite Fahrwerksteil kann insbesondere ein Teil des Rahmens bzw. der Wellen- und/oder Achsaufhängung, beispielsweise ein Längslenker, sein. Das Umgriffselement ist dazu ausgelegt, mittel- oder unmittelbar an dem ersten Fahrwerksteil angeordnet zu sein. Dieses Anordnen des Umgriffselements ermöglicht insbesondere, dass von dem Umgriffselement bevorzugt unmittelbar eine Kraft auf das erste Fahrwerksteil übertragen werden kann. Diese Kraftübertragung erfolgt dabei bevorzugt form- und/oder kraftschlüssig, beispielsweise durch ein Umschließen des ersten Fahrwerksteils mittels des Umgriffselements. Ähnlich wie das Umgriffselement dient das Abschlusselement dazu, an dem zweiten Fahrwerksteil mittel- oder unmittelbar angeordnet zu sein, wobei dieses Anordnen ebenfalls dazu dient, eine Kraft von dem Abschlusselement an das zweite Fahrwerksteil zu übertragen. Diese Kraftübertragung von dem Abschlusselement auf das zweite Fahrwerksteil kann dabei ebenfalls form- und/oder kraftschlüssig erfolgen. Die Festlegung des Umgriffselements und des Abschlusselements an dem ersten bzw. an dem zweiten Fahrwerksteil erfolgt dabei insbesondere derart, dass diese Verbindung in einem montierten Zustand jeweils ortsfest (nicht verlagerbar) durch Kraft- und/oder Formschluss ausgeführt ist. Das Umgriffselement weist zumindest zwei Schenkel auf, die sich in eine Schenkelrichtung erstrecken. Die Schenkelrichtung ist dabei insbesondere diejenige Richtung, in welche sich zumindest einer der Schenkel erstreckt. Die Erstreckungsrichtung des Schenkels ist dabei bevorzugt die Rotationssymmetrieachse des theoretischen/gedachten Zylinders, welcher den jeweiligen Schenkel umschließt. Alternativ oder zusätzlich bevorzugt kann die Schenkelrichtung auch durch die Erstreckungsrichtung in dem Bereich des Schenkels gebildet sein, in dem das Befestigungselement an dem Umgriffselement befestigt werden soll. Das Abschlusselement der Achsmontageeinheit erstreckt sich zwischen den beiden Schenkeln des Umgriffselements, wobei "zwischen ... erstrecken" dabei in diesem Zusammenhang bedeuten kann, dass insbesondere die beiden Schenkel durch das Abschlusselement miteinander verbunden sind und/oder dass von dem einen Schenkel auf den anderen Schenkel durch das Abschlusselement eine Kraft mittelbar und/oder unmittelbar übertragen werden kann. Das Abschlusselement kann dabei ein separates Bauteil zu den Schenkeln darstellen, wodurch eine besonders einfache Montage erreicht wird. Alternativ bevorzugt kann das Abschlusselement auch einstückig mit einem der beiden Schenkel ausgeformt sein, um eine besonders mechanisch belastbare Anbindung des Abschlusselements an den Schenkel sicherzustellen. Das Befestigungselement der Achsmontageeinheit dient dazu, das Abschlusselement mit dem Umgriffselement, insbesondere mit einem der Schenkel, zu verspannen. Bevorzugt erfolgt dies derart, dass das Umgriffselement und das Abschlusselement das erste und das zweite Fahrwerksteil zumindest teilweise, bevorzugt vollständig, umschließen. Durch das Verspannen des Abschlusselements mit dem Befestigungselement wird erreicht, dass das erste Fahrwerksteil mit dem zweiten Fahrwerksteil über die Achsmontageeinheit verspannt ist, so dass eine sichere Festlegung des ersten Fahrwerksteils am zweiten Fahrwerksteil durch die Achsmontageeinheit erreicht wird. Das Befestigungselement kann beispielsweise durch eine Mutter gebildet sein. Bevorzugt weisen die, insbesondere distalen, Endabschnitte des Umgriffselements, insbesondere des Schenkels, jeweils Haltestrukturen, wie z.B. ein Gewinde, zur Festlegung des Befestigungselements auf. Diese Haltestrukturen sind bevorzugt kein oder nur ein Teil der schenkelseitigen Sicherungseinrichtung der Achsmontageeinheit. Die Sicherungseinrichtung der Achsmontageeinheit kann beispielsweise eine Formschlusssicherung und/oder ein Mittel zur Schaffung einer Formschlusssicherung sein. Eine Formschlusssicherung kann beispielsweise durch einen sich quer zur Schenkelrichtung erstreckenden Bolzen gebildet sein und/oder durch einen Vorsprung am Schenkel. Die Sicherungseinrichtung kann alternativ oder zusätzlich bevorzugt auch durch Mittel zur Schaffung einer Formschlusssicherung gebildet sein. Diese Mittel zur Schaffung der Formschlusssicherung können beispielsweise Mittel sein, welche dazu dienen, insbesondere während des Verspannens bzw. der Montage des ersten Fahrwerksteils am zweiten Fahrwerksteil, eine plastische Verformung eines Teils der Achsmontageeinheit hervorzurufen, insbesondere des Befestigungselements und/oder des Umgriffselements und/oder des Abschlusselements. Dies kann beispielsweise durch Vorsehen von Nuten erreicht werden, welche während des Verspannens bzw. während des Montagevorgangs der Achsmontageeinheit zumindest teilweise durch plastische Umformung eines bzw. mehrerer Bestandteile der Achsmontageeinheit zumindest teilweise gefüllt werden, so dass hierdurch eine Formschlusssicherung entsteht. Die Formschlusssicherung ist dabei dazu ausgelegt, bei einem mechanischen Versagen wie beispielsweise bei einer Überlastung der Achsmontageeinheit oder bei einem Durchtrennen eines Teiles der Achsmontageeinheit, insbesondere eines der Schenkel, eine Verlagerung, insbesondere ein Herumfliegen, des abgetrennten Teils formschlüssig, zumindest in die Schenkelrichtung (positiv und negativ), zu begrenzen und/oder zu verhindern. Begrenzen bedeutet dabei in diesem Zusammenhang, dass die Formschlusssicherung zwar ein Spiel des abgetrennten Teils relativ zum Rest der Achsmontageeinheit, insbesondere zum Schenkel, zulassen kann, dieses Spiel ist dabei jedoch begrenzt, so dass insbesondere ein unkontrolliertes Herumfliegen der abgetrennten Teile bzw. des abgetrennten Teils nicht möglich ist. Das Durchtrennen eines Teils der Achsmontageeinheit kann dabei beispielsweise ein gewolltes Trennen sein oder ein ungewolltes Trennen, wie es beispielsweise bei einer mechanischen Überlastung der Fall ist. Ein gewolltes Trennen kann beispielsweise dann erforderlich sein, wenn die Achsmontageeinheit gelöst werden soll. Dieses gewollte Trennen kann insbesondere durch den Einsatz eines Trennschleifers erfolgen. Durch das Vorsehen der Sicherungseinrichtung wird erreicht, dass ein Herumfliegen von Teilen bei einem mechanischen Versagen oder Durchtrennen eines Teiles der Achsmontageeinheit verhindert wird, so dass ein besonders hohes Maß an Sicherheit bereitgestellt werden kann. Zusätzlich wird hierdurch auch der Wartungsaufwand reduziert, da externe Sicherungsmittel bei der Wartung der Achsmontageeinheit entfallen können.

Bevorzugt erstrecken sich die Schenkel beidseitig des ersten Fahrwerksteils oder sind dazu ausgelegt, sich beidseitig zu dem ersten Fahrwerksteil zu erstrecken. Hierdurch kann eine besonders einfache und sichere Festlegung der Achsmontageeinheit bzw. des ersten Fahrwerksteils am zweiten Fahrwerksteil erreicht werden. "Beidseitig erstrecken" kann dabei in anderen Worten bedeuten, dass sich ein Teil des Schenkels an einer Seite des ersten Fahrwerksteils und der andere Schenkel sich auf der anderen Seite des Fahrwerksteils erstreckt, so dass die beiden Schenkel insbesondere das erste Fahrwerksteil zumindest bereichsweise umschließen. Alternativ oder zusätzlich bevorzugt erstrecken sich die Schenkel beidseitig des zweiten Fahrwerksteils oder sind dazu ausgelegt, sich beidseitig zu dem zweiten Fahrwerksteil zu erstrecken.

Zweckmäßigerweise ist das Umgriffselement ein U-Bügel. Hierdurch kann eine besonders kostengünstige Achsmontageeinheit erreicht werden, da das Ausgestalten des Umgriffselements als ein U-Bügel besonders kostengünstig hergestellt werden kann. Zweckmäßigerweise weisen die Schenkel des U-Bügels bzw. des Umgriffselements zumindest bereichsweise einen runden und/oder ovalen Querschnitt auf. Hierdurch kann die Montage des Umgriffselements vereinfacht werden, da insbesondere Verletzungen bedingt durch scharfe Kanten vermieden werden.

Bevorzugt ist das Umgriffselement und/oder das Abschlusselement aus einem Metall, bevorzugt aus einem Stahl, besonders bevorzugt aus Federstahl, hergestellt. Hierdurch kann eine besonders sichere Fixierung des ersten Fahrwerksteils am zweiten Fahrwerksteil erreicht werden. Um Korrosion zu verhindern, kann es zweckmäßig sein, wenn das Umgriffselement und/oder das Abschlusselement einen Korrosionsschutzüberzug aufweisen, wie z.B. eine Lackierung und/oder eine Verzinkung.

Erfindungsgemäß ist das Befestigungselement auf dem Umgriffselement fixiert, erfindungsgemäß derart, dass das Befestigungselement nur irreversibel, insbesondere nicht zerstörungsfrei, vom Umgriffselement lösbar ist. Hierdurch kann eine besonders sichere Festlegung des Befestigungselements an dem Umgriffselement erreicht werden. Darüber hinaus ist eine solche Art der Festlegung auch besonders kostengünstig, da der Wartungsaufwand einer solchen Verbindung besonders gering ist. "Fixiert" kann in diesem Zusammenhang bedeuten, dass das Befestigungselement ortsfest mit dem Umgriffselement verbunden ist. Ein Fixieren kann insbesondere dadurch erreicht werden, dass zumindest ein Teil des Befestigungselements, insbesondere ein Teil, welcher mit der Haltestruktur kontaktiert, bei der Montage plastisch verformt wird, so dass das Fixieren nicht nur kraftschlüssig, sondern zusätzlich auch formschlüssig erfolgt. Vorteilhafterweise kann dies beispielsweise dadurch erreicht werden, dass es sich bei dem Befestigungselement um ein Huck-Bolt oder einen Schließringbolzen handelt.

Erfindungsgemäß weist das Abschlusselement zumindest eine Durchführung auf, durch welche sich einer der Schenkel erstreckt, oder welche dazu ausgelegt ist, dass sich einer der Schenkel durch diese erstreckt. Hierdurch kann eine besonders einfache Verbindungsausgestaltung zwischen dem Abschlusselement und dem Umgriffselement erreicht werden. Zusätzlich wird durch das Umschließen des Umgriffselements, insbesondere des Schenkels des Umgriffselements, auch formschlüssig ein Auswandern, insbesondere senkrecht zur Schenkelrichtung, verhindert, so dass eine besonders sichere Festlegung erreicht werden kann. Die Durchführung kann dabei insbesondere als eine Bohrung ausgestaltet sein, denn hierdurch kann eine besonders kostengünstige Herstellung der Durchführung erreicht werden.

Bevorzugt ist die Sicherungseinrichtung Teil des Umgriffselements und/oder des Abschlusselements und/oder des Befestigungselements. Hierdurch kann eine besonders bauraumsparende Achsmontageeinheit erreicht werden, da die Sicherungseinrichtung nicht als ein separates Bauteil ausgestaltet werden muss, sondern durch bereits vorhandene Bauteile gebildet ist.

Vorteilhafterweise weisen zumindest zwei Schenkel des Umgriffselements jeweils eine Sicherungseinrichtung auf, so dass jeder der Schenkel mechanisch versagen oder durchtrennt werden kann, und trotzdem eine Verlagerung des abgetrennten Teils formschlüssig durch die Formschlusssicherung begrenzt und/oder verhindert ist. Besonders vorteilhaft ist es, wenn jeder Schenkel des Umgriffselements jeweils eine Sicherungseinrichtung aufweist.

In einer vorteilhaften Ausführungsform umfasst die Sicherungseinrichtung einen Vorsprung, welcher sich bevorzugt quer, besonders bevorzugt senkrecht zur Schenkelrichtung erstreckt, wobei der Vorsprung sich von einem Schenkel aus erstreckt. Hierdurch kann eine besonders kostengünstige Achsmontageeinheit erreicht werden, da eine solche Sicherungseinrichtung einfach herzustellen ist. Beispielsweise kann der Vorsprung als eine Aufdickung des Schenkels ausgestaltet sein, welche insbesondere oval oder kreisförmig ausgestaltet ist. Hierdurch kann auf einfache Weise eine Sicherungseinrichtung erreicht werden und zusätzlich kann hierdurch mit einem solchen Umgriffselement auch auf einfache Weise eine Nachrüstung bereits existierender Systeme stattfinden. Diese ovale oder kreisförmige Form der Aufdickung bezieht sich dabei auf einen Querschnitt der Aufdickung in einer Ebene senkrecht zur jeweiligen Schenkelrichtung des Schenkels. Um ein sicheres festlegen der Aufdickung am Schenkel sicherzustellen, kann die Aufdickung einstückig mit dem Schenkel ausgeführt sein oder durch schoffschlüssiges Fügen, insbesondere durch Kleben oder Schweißen, an dem Schenkel festgelegt sein.

In einer bevorzugten Weiterbildung liegt das Verhältnis des mittleren Durchmessers des Schenkels zum Durchmesser des Vorsprungs in einem Bereich von 0,49 bis 0,92, bevorzugt in einem Bereich von 0,63 bis 0,80 und besonders bevorzugt in einem Bereich von 0,65 bis 0,785. Der mittlere Durchmesser des Schenkels kann dabei der gemittelte Durchmesser entlang der Schenkelrichtung sein. Der Maßgebliche Durchmesser des Vorsprungs ist insbesondere der maximale Durchmesser des Vorsprungs. Unter "Durchmesser" ist in diesem Zusammenhang insbesondere der Durchmesser des kleinstmöglichen Kreises zu verstehen, welcher den maßgeblichen Querschnitt umschließt. Bei einem Verhältnis des mittleren Durchmessers des Schenkels zum Durchmesser des Vorsprungs im Bereich von 0,49 bis 0,92 wird ein besonders leicht herzustellendes Umgriffselement erreicht, so dass Kosten gespart werden können. Bei einem Verhältnis im Bereich von 0,63 bis 0,80 kann erreicht werden, dass ein besonders sicheres Halten bzw. Begrenzen der Verlagerung des abgetrennten Teils sichergestellt werden kann. Bei einem Verhältnis von 0,65 bis 0,785 hat sich herausgestellt, dass eine besonders einfache Montage der Achsmontageeinheit erreicht werden kann.

Erfindungsgemäß umfasst die Sicherungseinrichtung eine Ausnehmung, welche dazu ausgelegt ist, beim Verspannen des Abschlusselements mit dem Umgriffselement das Befestigungselement plastisch zu verformen, so dass die Ausnehmung mit dem plastisch verformten Teil des Befestigungselements eine Formschlusssicherung bildet. Hierdurch kann auf besonders einfache und kompakte Art ein Mittel zur Schaffung einer Formschlusssicherung erreicht werden. Die Schaffung der Formschlusssicherung kann somit in anderen Worten dadurch erreicht werden, dass insbesondere bei der Montage der Achsmontageeinheit ein Teil des Befestigungselements derart plastisch verformt - in eine Ausnehmung der Sicherungseinrichtung - wird, so dass formschlüssig durch diesen plastisch verformten Teil eine Verlagerung des abgetrennten Teils der Achsmontageeinheit, insbesondere des Schenkels der Achsmontageeinheit, begrenzt und/oder verhindert wird. Diese plastische Verformung des Befestigungselements kann beispielsweise dadurch erleichtert werden, dass das Befestigungselement aus Aluminium und/oder aus Stahl ausgestaltet wird, denn diese beiden Materialien lassen jeweils ein hohes Maß an plastischem Verformungsgrad zu.

In einer erfindungsgemäßen Ausführungsform ist die Ausnehmung innerhalb der zumindest einen Durchführung des Abschlusselements angeordnet, wobei die Ausnehmung insbesondere ringförmig ausgestaltet ist. Durch das Vorsehen der Ausnehmung für die plastische Verformung innerhalb der Durchführung des Abschlusselements kann eine besonders kompakte Achsmontageeinheit bzw. Mittel zur Schaffung einer Formschlusssicherung erreicht werden. Zusätzlich hierzu bietet das Vorsehen der Ausnehmung im Abschlusselement auch noch den Vorteil, dass hierdurch besonders hohe mechanische Belastungen, welche für das plastische Verformen vonnöten sein können, sicher aufgenommen werden können. Durch das Ausgestalten der Ausnehmung als ringförmige Ausnehmung kann unter anderem erreicht werden, dass diese Ausnehmung durch besonders kostengünstige Herstellungsverfahren, wie z.B. Drehen, hergestellt werden kann, so dass Kosten gespart werden können. Zusätzlich zu dem Vorteil der kostengünstigen Herstellung weist eine ringförmige Ausgestaltung auch noch den Vorteil auf, dass hierdurch die plastische Verformung des Befestigungselements begünstigt bzw. erleichtert werden kann.

Zweckmäßigerweise umfasst die Achsmontageeinheit einen Achslappen, wobei der Achslappen zwischen dem ersten Fahrwerksteil und dem zweiten Fahrwerksteil angeordnet ist oder dazu ausgelegt ist, zwischen dem ersten Fahrwerksteil und dem zweiten Fahrwerksteil angeordnet zu sein, wobei der Achslappen zumindest eine Öffnung aufweist, durch welche sich ein Schenkel erstreckt, oder welche dazu ausgelegt ist, dass sich ein Schenkel durch die zumindest eine Öffnung erstreckt. Durch das Vorsehen eines Achslappens in der Achsmontageeinheit kann eine besonders sichere Anbindung des ersten Fahrwerksteils an den zweiten Fahrwerksteil erreicht werden, insbesondere deshalb, weil hierdurch eine Reduktion der lokal auftretenden Flächenpressung erreicht werden kann. Der Achslappen kann somit wie eine Art Beilagscheibe zwischen dem ersten Fahrwerksteil und dem zweiten Fahrwerksteil angeordnet sein, wobei die jeweiligen Kontaktflächen an die äußere Geometrie des ersten Fahrwerksteils und/oder des zweiten Fahrwerksteils jeweils individuell anzupassen ist, um eine Reduktion von lokalen Flächenpressungen zu erreichen. Bevorzugt ist die Öffnung des Achslappens für die Durchführung des Schenkels dabei derart gestaltet, dass die Sicherungseinrichtung durch die Öffnung führbar ist, um eine Vereinfachung der Montage sicherzustellen.

Die Erfindung betrifft des Weiteren ein Verfahren zur Montage einer Achsmontageeinheit, insbesondere für Nutzfahrzeuge, wobei die Achsmontageeinheit ein Umgriffselement, ein Abschlusselement und ein Befestigungselement umfasst. Das Verfahren weist dabei die Schritte auf:
- Verbinden des Umgriffselements mit dem Abschlusselement,
- Anordnen des Umgriffselements an einem ersten Fahrwerksteil, insbesondere einer Achse,
- Anordnen des Abschlusselements an einem zweiten Fahrwerksteil, insbesondere einem Lenker,
- Verspannen des Umgriffselements mit dem Abschlusselement durch das Befestigungselement,
- wobei das Befestigungselement beim Verspannen derart plastisch verformt wird, dass das Befestigungselement irreversibel am Umgriffselement und/oder am Abschlusselement festgelegt wird.

Die Achsmontageeinheit kann dabei die bereits beschriebenen Merkmale aufweisen, so dass insbesondere das Umgriffselement, das Abschlusselement und das Befestigungselement der Achsmontageeinheit durch die bereits beschriebenen Umgriffselemente, Abschlusselemente und/oder Befestigungselemente gebildet sein kann. Unter "irreversibel am Umgriffselement festgelegt" ist dabei zu verstehen, dass das Befestigungselement am Umgriffselement derart festgelegt ist, dass dieses nicht zerstörungsfrei vom Befestigungselement gelöst werden kann, sondern dass zumindest das Befestigungselement und/oder das Umgriffselement zerstört werden muss, um diese Verbindung zu lösen. Beispielsweise kann so eine irreversible Festlegung mittels plastischer Verformung des Befestigungselements, beispielsweise durch eine Verformung mittels einer hydraulischen Presse, erreicht werden. Insbesondere ist diese plastische irreversible Festlegung dabei derart ausgestaltet, dass das Befestigungselement ortsfest mit dem Umgriffselement und/oder dem Abschlusselement verbunden ist, so dass keinerlei Relativbewegung zwischen den maßgeblichen Elementen stattfinden kann.

In einer bevorzugten Ausführungsform ist die Achsmontageeinheit eine Achsmontageeinheit gemäß einer der oben beschriebenen Art.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- Fig. 1: eine Ansicht einer Achsmontageeinheit;
- Fig. 2: ein Umgriffselement;
- Fig. 3: eine Schnittansicht durch einen Schenkel eines Umgriffselements;
- Fig. 4: eine Teilansicht einer Achsmontageeinheit;
- Fig. 5 und 6: je ein Mittel zur Schaffung einer Formschlusssicherung bei einer Achsmontageeinheit.

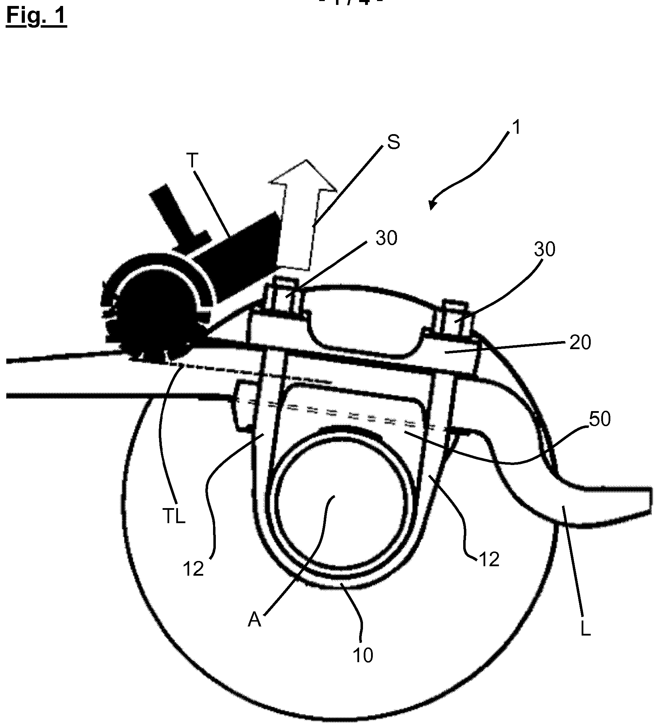

In der **Figur 1** ist eine Achsmontageeinheit 1 gezeigt, welche ein Umgriffselement 10 umfasst. Zwischen den Schenkeln 12 des Umgriffselements 10 ist ein Abschlusselement 20 angeordnet. Das Abschlusselement 20 ist dabei derart mittels der Befestigungselemente 30 mit dem Abschlusselement 20 verspannt, so dass das erste Fahrwerksteil A mit dem zweiten Fahrwerksteil L verspannt ist. Zwischen dem ersten Fahrwerksteil A, welches in der dargestellten Ausführungsform durch ein Achsrohr gebildet ist, und dem zweiten Fahrwerksteil L, welches in der dargestellten Ausführungsform durch einen Längslenker gebildet ist, ist ein Achslappen 50 angeordnet, so dass die lokal auftretende Flächenpressung am ersten Fahrwerksteil A und am zweiten Fahrwerksteil L minimiert wird. In der Figur 1 ist schematisch dargestellt, dass der linke Schenkel 12, welcher sich wie der rechte Schenkel 12 in Schenkelrichtung S erstreckt, durch ein Trennwerkzeug T entlang der Trennlinie TL getrennt werden kann. Durch die in den Schenkeln 12 vorhandene mechanische Spannung kann der abgetrennte Teil sich in Schenkelrichtung S verlagern bzw. wegfliegen, so dass dieser abgetrennte Teil Beschädigungen und/oder Verletzungen an Personen verursachen kann. Um dies zu verhindern, verfügt die in der Figur 1 dargestellte Achsmontageeinheit 1 über eine nicht erkennbare Sicherungseinrichtung 40, um dieses Verlagern des abgetrennten Teils formschlüssig in Schenkelrichtung S zu begrenzen und/oder zu verhindern.

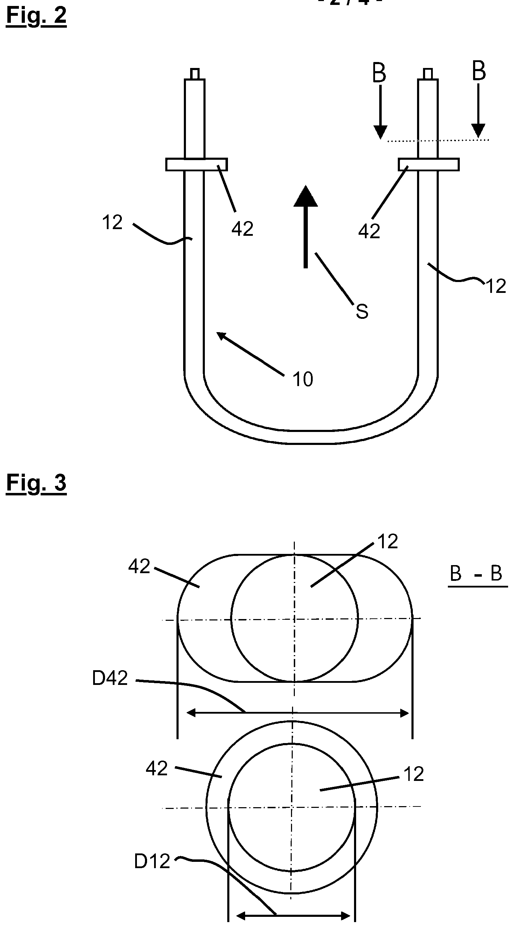

In der **Figur 2** ist ein Umgriffselement 10 einer Achsmontageeinheit 1 dargestellt. Dieses Umgriffselement 10 verfügt über zwei parallel zueinander ausgerichtete Schenkel 12, welche sich in Schenkelrichtung S erstrecken. Jeder dieser Schenkel 12 verfügt dabei im oberen Drittel (dem freien Ende des Schenkels zugewandten Drittels) über einen Vorsprung 42, welcher sich quer zur Schenkelrichtung S erstreckt. Dieser Vorsprung 42 bildet zumindest einen Teil der Sicherungseinrichtung der Achsmontageeinheit 1 aus.

In der **Figur 3** sind zwei verschiedene prinzipielle Ausgestaltungsformen des Vorsprungs 42 aus Figur 2 dargestellt. Der Ort des in der Figur 3 dargestellten Schnitts (B - B) ist prinzipiell aus der Figur 2 ersichtlich. In der oberen Hälfte von Figur 3 ist eine oval bzw. elliptische Ausgestaltung des Vorsprungs 42 des Schenkels 12 dargestellt, wobei der Durchmesser des Vorsprungs D42 größer ist, als der Durchmesser D12 des Schenkels 12. In dem unteren Teil von Figur 3 ist eine alternative Ausführungsform des Vorsprungs 42 des Schenkels 12 gezeigt, wobei hier der Vorsprung 42 einen kreisrunden Querschnitt aufweist.

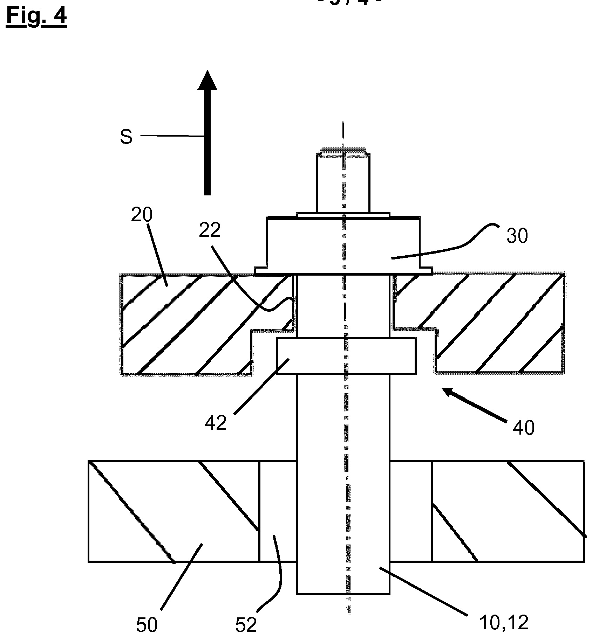

In der **Figur 4** ist ein Ausschnitt aus einer zusammengebauten bzw. montierten Achsmontageeinheit 1 zu erkennen. Der Schenkel 12 des Umgriffselements 10 verfügt dabei über einen Vorsprung 42, welcher in dem hier dargestellten montierten Zustand einen Spalt in Schenkelrichtung S zum Abschlusselement 20 aufweist. Dieser Schenkel 12 des Umgriffselements 10 ist durch die Durchführung 22 des Abschlusselements 20 geführt. Sollte der Schenkel 12 bzw. das Umgriffselement 10 in Schenkelrichtung S unterhalb des Vorsprungs 42 durchtrennt werden und/oder mechanisch versagen, so begrenzt der Vorsprung 42 und/oder verhindert der Vorsprung 42 eine Verlagerung des (obigen) abgetrennten Teils formschlüssig, so dass der Vorsprung 42 in Kombination mit dem Abschlusselement 20 eine Sicherungseinrichtung 40 bildet. Um das Umgriffselement 10 und das Abschlusselement 20 miteinander verspannen zu können, verfügt die Achsmontageeinheit 1 über zumindest ein Befestigungselement 30. In der in Figur 4 dargestellten Ausführungsform erstreckt sich der dargestellte Schenkel 12 durch eine Öffnung 52 des Achslappens 50, wobei diese Öffnung 52 dabei derart gestaltet ist, dass diese groß genug ist, so dass der Vorsprung 42 durch die Öffnung 52 geführt werden kann, um die Montage zu vereinfachen.

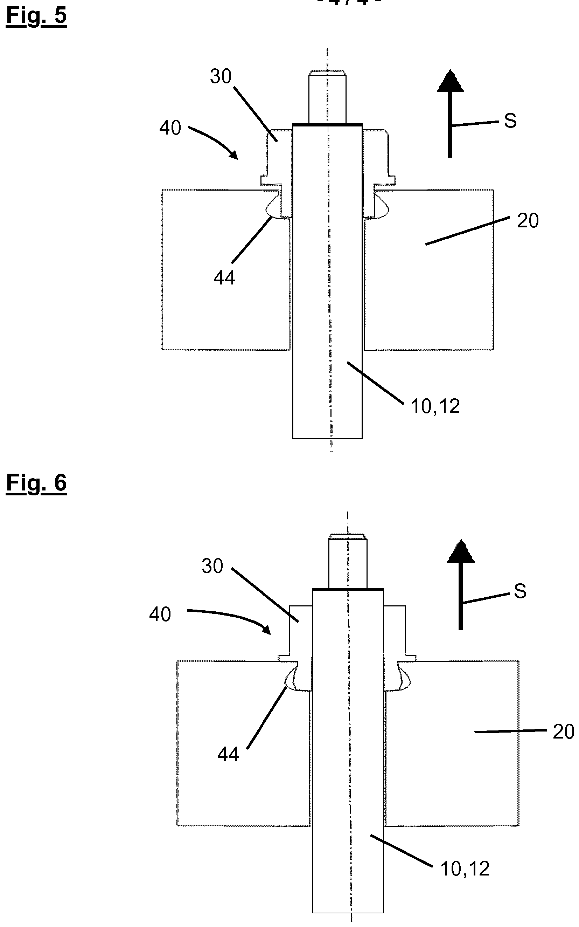

In der **Figur 5** und in der **Figur 6** ist eine beispielhafte Ausführungsform für eine Sicherungseinrichtung 40 gezeigt, welche ein Mittel zur Schaffung einer Formschlusssicherung darstellt. In der Figur 5 ist eine Situation gezeigt, kurz bevor das Befestigungselement 30 mit dem Abschlusselement 20 bzw. dem Umgriffselement 10 verspannt wird. Das Befestigungselement 30 weist dabei einen ringförmigen Vorsprung in negative Schenkelrichtung S auf, welcher dazu ausgelegt ist, durch das Verspannen des Befestigungselements 30 mit dem Abschlusselement 20 derart plastisch verformt zu werden, dass sich in der ringförmigen Ausnehmung 44 des Abschlusselements 20 eine Sicherungseinrichtung 40 bildet, wie es in Figur 6 dargestellt ist.

### Bezugszeichenliste

- 1: - Achsmontageeinheit
- 10: - Umgriffselement
- 12: - Schenkel
- 20: - Abschlusselement
- 22: - Durchführung
- 30: - Befestigungselement
- 40: - Sicherungseinrichtung
- 42: - Vorsprung
- 44: - Ausnehmung
- 50: - Achslappen
- 52: - Öffnung
- A: - erster Fahrwerksteil
- D12: - Durchmesser des Schenkels 12
- D42: - Durchmesser des Vorsprungs 42
- L: - zweiter Fahrwerksteil
- S: - Schenkelrichtung
- T: - Trennwerkzeug
- TL: - Trennlinie

## Patentansprüche

1. Achsmontageeinheit (1), insbesondere für Nutzfahrzeuge, umfassend ein Umgriffselement (10), ein Abschlusselement (20), zumindest ein Befestigungselement (30) und eine Sicherungseinrichtung (40),
wobei die Achsmontageeinheit (1) dazu ausgelegt ist, ein erstes Fahrwerksteil (A), insbesondere eine Achse, mit einem zweiten Fahrwerksteil (L), insbesondere einem Lenker, zu verspannen,
wobei das Umgriffselement (10) dazu ausgelegt ist, an dem ersten Fahrwerksteil (A) angeordnet zu sein,
wobei das Abschlusselement (20) dazu ausgelegt ist, an dem zweiten Fahrwerksteil (L) angeordnet zu sein,
wobei das Umgriffselement (10) zumindest zwei Schenkel (12) aufweist, welche sich jeweils in eine Schenkelrichtung (S) erstrecken,
wobei sich das Abschlusselement (20) zwischen den beiden Schenkeln (12) erstreckt oder dazu ausgelegt ist, sich zwischen den beiden Schenkeln (12) zu erstrecken,
wobei das Befestigungselement (30) das Abschlusselement (20) mit dem Umgriffselement (10) verspannt oder dazu ausgelegt ist, das Abschlusselement (20) mit dem Umgriffselement (10) zu verspannen,
wobei das Abschlusselement (20) zumindest eine Durchführung (22) aufweist, durch welche sich einer der Schenkel (12) erstreckt oder welche dazu ausgelegt ist, dass sich einer der Schenkel (12) durch diese erstreckt, wobei die Sicherungseinrichtung (40) eine Formschlusssicherung ist und/oder ein Mittel zur Schaffung einer Formschlusssicherung ist,
wobei die Formschlusssicherung dazu dient, bei einem mechanischen Versagen oder dem Durchtrennen eines Teils der Achsmontageeinheit (1), insbesondere eines Teils des Schenkels (12), eine Verlagerung des abgetrennten Teils formschlüssig in Schenkelrichtung (S) zu begrenzen und/oder zu verhindern,
wobei die Sicherungseinrichtung (40) eine Ausnehmung (44) umfasst, welche dazu ausgelegt ist, beim Verspannen des Abschlusselements (20) mit dem Umgriffselement (10) das Befestigungselement (30) plastisch zu verformen, sodass die Ausnehmung (44) mit dem plastisch verformten Teil des Befestigungselements (30) eine Formschlusssicherung bildet, wobei das Befestigungselement (30) auf dem Umgriffselement (10) derart fixiert ist, dass das Befestigungselement (30) nur irreversibel, insbesondere nicht zerstörungsfrei, vom Umgriffselement (10) lösbar ist, **dadurch gekennzeichnet, dass** die Ausnehmung (44) innerhalb der zumindest einen Durchführung (22) des Abschlusselements (20) angeordnet ist.

2. Achsmontageeinheit (1) gemäß Anspruch 1,
wobei die Schenkel (12) sich beidseitig des ersten Fahrwerksteils (A) erstrecken oder dazu ausgelegt sind, sich beidseitig zu dem ersten Fahrwerksteil (A) zu erstrecken.

3. Achsmontageeinheit (1) gemäß einem der vorhergehenden Ansprüche, wobei das Umgriffselement (10) ein U-Bügel ist.

4. Achsmontageeinheit (1) gemäß einem der vorhergehenden Ansprüche, wobei die Sicherungseinrichtung (40) Teil des Umgriffselements (10) und/oder des Abschlusselements (20) und/oder des Befestigungselements (30) ist.

5. Achsmontageeinheit (1) gemäß Anspruch 4,
wobei die Sicherungseinrichtung (40) einen Vorsprung (42) umfasst, welcher sich insbesondere senkrecht zur Schenkelrichtung (S) erstreckt,
wobei der Vorsprung (42) sich von einem Schenkel (12) aus erstreckt.

6. Achsmontageeinheit (1) gemäß Anspruch 5,
wobei das Verhältnis des mittleren Durchmessers (D12) des Schenkels (12) zum Durchmesser (D42) des Vorsprungs (42) in einem Bereich von 0,49 bis 0,92, bevorzugt in einem Bereich von 0,63 bis 0,80 und besonders bevorzugt in einem Bereich von 0,65 bis 0,785 liegt.

7. Achsmontageeinheit (1) gemäß einem der vorhergehenden Ansprüche,
wobei die Ausnehmung (44) ringförmig ausgestaltet ist.

8. Achsmontageeinheit (1) gemäß einem der vorhergehenden Ansprüche, umfassend einen Achslappen (50),
wobei der Achslappen (50) zwischen dem ersten Fahrwerksteil (A) und dem zweiten Fahrwerksteil (L) angeordnet ist oder dazu ausgelegt ist, zwischen dem ersten Fahrwerksteil (A) und dem zweiten Fahrwerksteil (L) angeordnet zu sein,
wobei der Achslappen (50) zumindest eine Öffnung (52) aufweist, durch welche sich ein Schenkel (12) erstreckt oder welche dazu ausgelegt ist, dass sich ein Schenkel (12) durch die zumindest eine Öffnung (52) erstreckt.

9. Verfahren zur Montage einer Achsmontageeinheit (1), insbesondere für Nutzfahrzeuge,
wobei die Achsmontageeinheit (1) ein Umgriffselement (10), ein Abschlusselement (20) und ein Befestigungselement (30) umfasst,
aufweisend die Schritte:
- Verbinden des Umgriffselements (10) mit dem Abschlusselement (20)
- Anordnen des Umgriffselements (10) an einem ersten Fahrwerksteil (A), insbesondere einer Achse,
- Anordnen des Abschlusselements (20) an einem zweiten Fahrwerksteil (L), insbesondere einem Lenker,
- Verspannen des Umgriffselements (10) mit dem Abschlusselement (20) durch das Befestigungselement (30),
- **dadurch gekennzeichnet, dass** das Befestigungselement (30) beim Verspannen derart plastisch verformt wird, dass das Befestigungselement (30) irreversibel am Umgriffselement (10) und/oder am Abschlusselement (20) festgelegt wird,
**dadurch gekennzeichnet, dass** die Achsmontageeinheit (1) eine Achsmontageeinheit (1) gemäß einem der Ansprüche 1 bis 8 ist.

## Claims

1. Axle mounting unit (1), in particular for commercial vehicles, comprising a surrounding element (10), an end element (20), at least one fastening element (30) and a securing device (40)
wherein the axle mounting unit (1) is configured to brace a first chassis part (A), in particular an axle, to a second chassis part (L), in particular a control arm,
wherein the surrounding element (10) is configured to be arranged on the first chassis part (A),
wherein the end element (20) is configured to be arranged on the second chassis part (L),
wherein the surrounding element (10) has at least two legs (12) which each extend in a leg direction (S),
wherein the end element (20) extends between the two legs (12) or is configured to extend between the two legs (12),
wherein the fastening element (30) braces the end element (20) with the surrounding element (10) or is configured to brace the end element (20) with the surrounding element (10),
wherein the end element (20) has at least one lead-through (22) through which one of the legs (12) extends or which is configured for one of the legs (12) to extend therethrough,
wherein the securing device (40) is a form-fit securing device and/or is a means of creating a positive locking,
wherein the form-fit securing device serves to limit and/or prevent a displacement of the separated part in the direction of the leg (S) in a positive-locking manner in the event of mechanical failure or the severing of a part of the axle mounting unit (1), in particular of a part of the leg (12),
wherein the securing device (40) comprises a recess (44) which is configured to plastically deform the fastening element (30) when the end element (20) is braced with the surrounding element (10), so that the recess (44) forms a positive-locking connection with the plastically deformed part of the fastening element (30),
wherein the fastening element (30) is fixed on the surrounding element (10) in such a way that the fastening element (30) can only be released irreversibly, in particular not non-destructively, from the surrounding element (10),
**characterized in that**
the recess (44) is arranged within the at least one lead-through (22) of the end element (20).

2. Axle mounting unit (1) according to claim 1,
wherein the legs (12) extend on both sides of the first chassis part (A) or are configured to extend on both sides of the first chassis part (A).

3. Axle mounting unit (1) according to one of the preceding claims, wherein the surrounding element (10) is a U-shaped bracket.

4. Axle mounting unit (1) according to one of the preceding claims, wherein the securing device (40) is part of the surrounding element (10) and/or the end element (20) and/or the fastening element (30).

5. Axle mounting unit (1) according to claim 4,
wherein the securing device (40) comprises a projection (42) which extends in particular perpendicular to the direction of the leg (S), wherein the projection (42) extends from one leg (12).

6. Axle mounting unit (1) according to claim 5,
wherein the ratio of the mean diameter (D12) of the leg (12) to the diameter (D42) of the projection (42) is in a range from 0.49 to 0.92, preferably in a range from 0.63 to 0.80 and most preferably in a range from 0.65 to 0.785.

7. Axle mounting unit (1) according to one of the previous claims, wherein the recess (44) is annular.

8. Axle mounting unit (1) according to one of the preceding claims, comprising a spring pad (50),
wherein the spring pad (50) is arranged between the first chassis part (A) and the second chassis part (L) or is configured to be arranged between the first chassis part (A) and the second chassis part (L),
wherein the spring pad (50) has at least one opening (52) through which a leg (12) extends or which is configured for a leg (12) to extend through the at least one opening (52).

9. Method of mounting an axle mounting unit (1), especially for commercial vehicles,
wherein the axle mounting unit (1) comprises a surrounding element (10), an end element (20) and a fastening element (30),
comprising the steps:
- connecting the surrounding element (10) to the end element (20)
- arranging of the surrounding element (10) on a first chassis part (A), in particular an axle,
- arranging the end element (20) on a second chassis part (L), in particular a control arm,
- bracing of the surrounding element (10) with the end element (20) by means of the fastening element (30),
wherein the fastening element (30) is plastically deformed during bracing in such a way that the fastening element (30) is irreversibly fixed to the surrounding element (10) and/or to the end element (20),
**characterized by** the axle mounting unit (1) is an axle mounting unit (1) according to any one of claims 1 to 8.

## Revendications

1. Unité de montage d'essieu (1), en particulier pour véhicules utilitaires, comprenant un élément d'enserrement (10), un élément de fermeture (20), au moins un élément de fixation (30) et un dispositif de blocage (40),
dans laquelle
l'unité de montage d'essieu (1) est conçue pour serrer une première partie de train de roulement (A), en particulier un essieu, avec une seconde partie de train de roulement (L), en particulier un bras oscillant,
l'élément d'enserrement (10) est conçu pour être disposé sur la première partie de train de roulement (A),
l'élément de fermeture (20) est conçu pour être disposé sur la seconde partie de train de roulement (L),
l'élément d'enserrement (10) comprend au moins deux branches (12) qui s'étendent chacune dans une direction de branche (S),
l'élément de fermeture (20) s'étend entre les deux branches (12) ou est conçu pour s'étendre entre les deux branches (12),
l'élément de fixation (30) serre l'élément de fermeture (20) avec l'élément d'enserrement (10) ou est conçu pour serrer l'élément de fermeture (20) avec l'élément d'enserrement (10),
l'élément de fermeture (20) présente au moins un passage (22) qui est traversé par l'une des branches (12) ou qui est conçu pour être traversé par l'une des branches (12),
le dispositif de blocage (40) est un blocage en coopération de forme et/ou est un moyen pour fournir un blocage en coopération de forme,
le blocage en coopération de forme sert, en cas de défaillance mécanique ou de séparation d'une partie de l'unité de montage d'essieu (1), en particulier d'une partie de la branche (12), à limiter et/ou à empêcher par coopération de forme, dans la direction de branche (12), un déplacement de la partie séparée,
le dispositif de blocage (40) présente un évidement (44) qui est conçu pour déformer plastiquement l'élément de fixation (30) lors d'un serrage de l'élément de fermeture (20) avec l'élément d'enserrement (10), de sorte que l'évidement (44) constitue un blocage en coopération de forme avec la partie plastiquement déformée de l'élément de fixation (30),
l'élément de fixation (30) est fixé sur l'élément d'enserrement (10) de telle sorte que l'élément de fixation (30) n'est amovible de l'élément d'enserrement (10) que de façon irréversible, en particulier non pas sans être détruit,
**caractérisé en ce que**
l'évidement (44) est disposé à l'intérieur dudit au moins un passage (22) de l'élément de fermeture (20).

2. Unité de montage d'essieu (1) selon la revendication 1,
dans laquelle les branches (12) s'étendent de part et d'autre de la première partie de train de roulement (A) ou sont conçues pour s'étendre de part et d'autre de la première partie de train de roulement (A).

3. Unité de montage d'essieu (1) selon l'une des revendications précédentes,
dans laquelle l'élément d'enserrement (10) est un étrier en U.

4. Unité de montage d'essieu (1) selon l'une des revendications précédentes,
dans laquelle l'élément de blocage (40) fait partie de l'élément d'enserrement (10) et/ou de l'élément de fermeture (20) et/ou de l'élément de fixation (30).

5. Unité de montage d'essieu (1) selon la revendication 4,
dans laquelle le dispositif de blocage (40) comprend une saillie (42) qui s'étend en particulier perpendiculairement à la direction de branche (S), la saillie (42) s'étendant à partir d'une branche (12).

6. Unité de montage d'essieu (1) selon la revendication 5,
dans laquelle le rapport du diamètre moyen (D12) de la branche (12) sur le diamètre (D42) de la saillie (42) est dans une plage de 0,49 à 0,92, de préférence dans une plage de 0,63 à 0,80 et de manière particulièrement préférée dans une plage de 0,65 à 0,785.

7. Unité de montage d'essieu (1) selon l'une des revendications précédentes,
dans laquelle l'évidement (44) est réalisé en forme annulaire.

8. Unité de montage d'essieu (1) selon l'une des revendications précédentes,
comprenant une patte d'essieu (50),
la patte d'essieu (50) étant disposée entre la première partie de train de roulement (A) et la seconde partie de train de roulement (L) ou étant conçue pour être disposée entre la première partie de train de roulement (A) et la seconde partie de train de roulement (L),
la patte d'essieu (50) présentant au moins une ouverture (52) à travers laquelle s'étend une branche (12) ou qui est adaptée pour qu'une branche (12) s'étende à travers ladite au moins une ouverture (52).

9. Procédé de montage d'une unité de montage d'essieu (1), en particulier pour véhicules utilitaires,
dans lequel l'unité de montage d'essieu (1) comprend un élément d'enserrement (10), un élément de fermeture (20) et un élément de fixation (30),
comprenant les étapes suivantes consistant à :
- relier l'élément d'enserrement (10) à l'élément de fermeture (20),
- placer de l'élément d'enserrement (10) sur une première partie de train de roulement (A), en particulier sur un essieu,
- placer l'élément de fermeture (20) sur une seconde partie de train de roulement (L), en particulier sur un bras oscillant,
- serrer l'élément d'enserrement (10) avec l'élément de fermeture (20) au moyen de l'élément de fixation (30),
- **caractérisé en ce que** l'élément de fixation (30) est déformé plastiquement lors du serrage, de telle sorte que l'élément de fixation (30) est immobilisé de manière irréversible sur l'élément d'enserrement (10) et/ou sur l'élément de fermeture (20),
**caractérisé en ce que** l'unité de montage d'essieu (1) est une unité de montage d'essieu (1) selon l'une des revendications 1 à 8.
